# EUROPÄISCHE PATENTSCHRIFT

(11) **EP 3 775 532 B1**
(45) Veröffentlichungstag und Bekanntmachung des Hinweises auf die Patenterteilung: **01.02.2023**
(21) Anmeldenummer: 19716112.8
(22) Anmeldetag: 02.04.2019
(51) Int. Cl.: F03D 1/06

(54) **WINDENERGIEANLAGEN-ROTORBLATT UND WINDENERGIEANLAGE**
WIND TURBINE ROTOR BLADE AND WIND TURBINE
PALE DE ROTOR D'ÉOLIENNE ET ÉOLIENNE

(30) Priorität: 12.04.2018 DE 102018108695
(43) Veröffentlichungstag der Anmeldung: 17.02.2021
(73) Patentinhaber: Wobben Properties GmbH, 26607 Aurich (DE)
(72) Erfinder: BÜRKNER, Falko, 28757 Bremen (DE); HOFFMANN, Alexander, 26721 Emden (DE)
(74) Vertreter: Eisenführ Speiser
(86) Internationale Anmeldenummer: PCT/EP2019/058251
(87) Internationale Veröffentlichungsnummer: WO 2019/197210

(56) Entgegenhaltungen:
- WO-A1-2017/085088
- DE-A1-102010 046 518
- JP-A- 2006 123 277

## Beschreibung

Die vorliegende Erfindung betrifft ein Windenergieanlagen-Rotorblatt sowie eine Windenergieanlage.

Rotorblätter moderner Windenergieanlagen können mittlerweile so lang sein, dass ein Transport des Rotorblattes in einem Stück nicht mehr möglich ist. Daher kann ein Rotorblatt einer Windenergieanlage mehrteilig ausgestaltet sein, so dass die jeweiligen Teile separat zur Baustelle angeliefert werden und dann dort zusammengesetzt werden.

WO 2017/085088 A1 zeigt ein Rotorblatt einer Windenergieanlage mit einer Blattinnenseite, einer Blattaußenseite und einem ersten und zweiten Rotorblattteil, welche mittels einer Befestigungseinheit in einer Teilungsebene miteinander befestigt sind. Die Befestigungseinheit weist einen Querbolzen sowie ein Stahlseil auf, welches durch ein Loch in den zweiten Rotorblattteil geführt wird und in der Klemmeinheit eingeklemmt ist. Das zweite Ende des Stahlseils ist in der ersten Klemmeinheit auf der Blattaußenseite eingeklemmt.

Die zweite Klemmeinheit ist auf der Blattinnenseite vorgesehen.

In der prioritätsbegründenden deutschen Patentanmeldung hat das Deutsche Patent- und Markenamt die folgenden Dokumente recherchiert: DE 29 21 152 A1, DE 10 2010 046 518 A1, DE 10 2010 046 519 A1 und WO 2017/085 088 A1. Weiterer Stand der Technik ist in JP 2006 123277 A offenbart.

Es ist eine Aufgabe der vorliegenden Erfindung, ein Windenergieanlagen-Rotorblatt sowie eine Windenergieanlage vorzusehen, welche eine verbesserte Verbindung der Teile eines mehrteiligen Windenergieanlagen-Rotorblattes ermöglicht.

Diese Aufgabe wird durch ein Windenergieanlagen-Rotorblatt nach Anspruch 1 gelöst.

Gemäß einem Aspekt der vorliegenden Erfindung ist mindestens eine Nut in dem ersten und zweiten Rotorblattabschnitt und im Bereich der Trennebene vorgesehen. Diese Nut ist an der Rotorblattaußenseite vorgesehen. Die mindestens eine Nut ist dazu ausgestaltet, das Seil der Befestigungseinheit zumindest teilweise aufzunehmen.

Gemäß einem weiteren Aspekt der vorliegenden Erfindung weisen die Querbolzen zumindest teilweise eine Gleitbeschichtung auf, um Reibung zwischen dem Seil und dem Querbolzen zu reduzieren.

Gemäß einem weiteren Aspekt der vorliegenden Erfindung ist eine Mehrzahl von Zentrierbolzen vorgesehen, welche sowohl in dem Laminat des ersten Rotorblattteils als auch in dem Laminat des zweiten Rotorblattteils hineinragen.

Gemäß einem weiteren Aspekt der vorliegenden Erfindung weisen die Querbolzen jeweils eine Seilführung für das Seil auf.

Die vorliegende Erfindung betrifft ebenfalls eine Windenergieanlage mit mindestens einem oben beschriebenen Windenergieanlagen-Rotorblatt.

Die Erfindung betrifft ebenfalls eine Windenergieanlage gemäß dem unabhängigen Anspruch 7.

Die Erfindung betrifft ebenfalls ein Verfahren zur Montage eines Windenergieanlagen-Rotorblattes, wie in Anspruch 8 definiert.

Die Erfindung betrifft einen Gedanken, zwei Bauteile (beispielsweise GFK-Bauteile, glasfaserverstärkte Kunststoff-Bauteile oder kohlenfaserverstärkte Kunststoff-Bauteile) eines Rotorblatts einer Windenergieanlage so zu verbinden, dass eine Wartung der Verbindung aus dem Inneren des Rotorblattes möglich ist. Zur Verbindung von zwei Bauteilen eines Windenergieanlagen-Rotorblattes wird eine Befestigungseinheit vorgesehen.

Vorteile und Ausführungsbeispiele der Erfindung werden nachstehend unter Bezugnahme auf die Zeichnung näher erläutert.
- Fig. 1: zeigt eine schematische Darstellung einer Windenergieanlage gemäß der Erfindung,
- Fig. 2: zeigt eine schematische Darstellung eines mehrteiligen Windenergieanlagen-Rotorblatts gemäß der Erfindung,
- Fig. 3A: zeigt eine schematische Schnittansicht einer Trennstelle von Fig. 2,
- Fig. 3B: zeigt eine schematische Draufsicht auf eine Trennstelle von Fig. 2,
- Fig. 4A: zeigt eine schematische Schnittansicht einer Trennstelle eines Rotorblattes,
- Fig. 4B: zeigt eine schematische Draufsicht auf eine Schnittstelle eines Rotorblattes,
- Fig. 5A: zeigt eine schematische Schnittstelle einer Trennstelle eines Rotorblattes, und
- Fig. 5B: zeigt eine schematische Draufsicht auf eine Schnittstelle eines Rotorblattes gemäß der Erfindung.

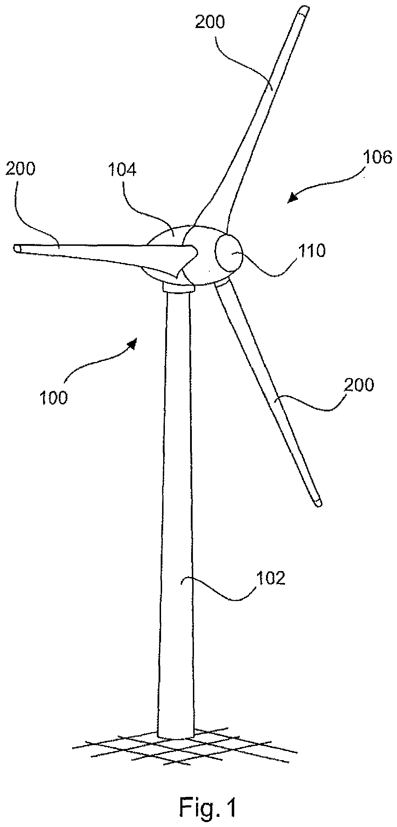

Fig. 1 zeigt eine schematische Darstellung einer Windenergieanlage gemäß der Erfindung. Die Windenergieanlage 100 weist einen Turm 102 und eine Gondel 104 auf dem Turm 102 auf. An der Gondel 104 ist ein aerodynamischer Rotor 106 mit drei Rotorblättern 200 und einem Spinner 110 vorgesehen. Der aerodynamische Rotor 106 wird im Betrieb der Windenergieanlage durch den Wind in eine Drehbewegung versetzt und dreht somit auch einen Rotor oder Läufer eines Generators, welcher direkt oder indirekt mit dem aerodynamischen Rotor 106 gekoppelt ist. Der elektrische Generator ist in der Gondel 104 angeordnet und erzeugt elektrische Energie. Die Pitchwinkel der Rotorblätter 200 können durch Pitchrnotoren an den Rotorblattwurzeln der jeweiligen Rotorblätter 200 verändert werden.

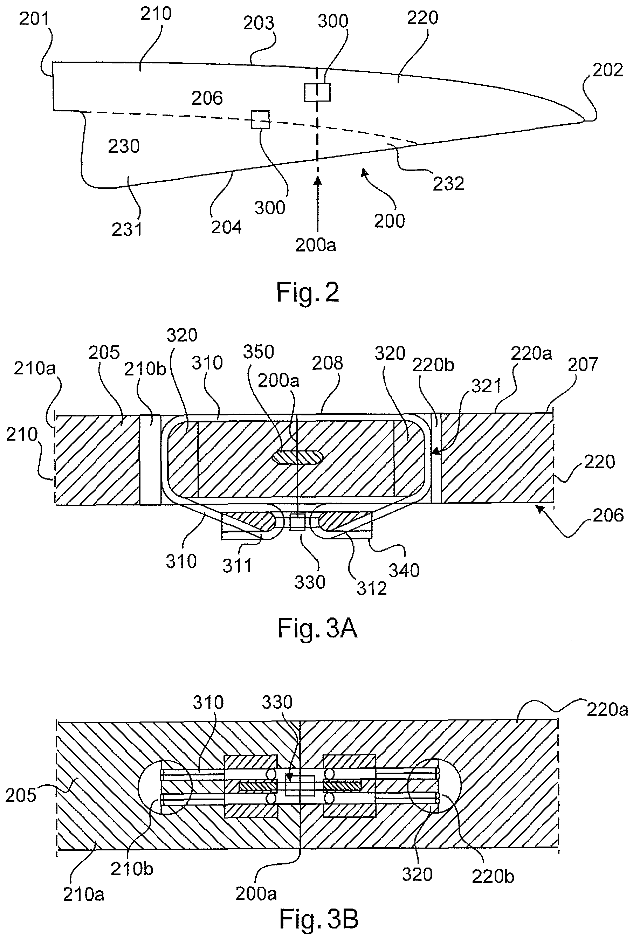

Fig. 2 zeigt eine schematische Darstellung eines mehrteiligen Windenergieanlagen-Rotorblatts gemäß der Erfindung. Das Rotorblatt weist eine Rotorblattwurzel 201, eine Rotorblattspitze 202, eine Rotorblattvorderkante 203 und eine Rotorblatthinterkante 204 auf und besteht beispielsweise aus drei Teilen bzw. Abschnitten 210 - 230. Das Rotorblatt 200 weist eine Teilungsebene 200a auf. Die Rotorblattteile 210 - 230 können beispielsweise mittels Befestigungseinheiten 300 und der Teilungsebene 200a aneinander befestigt werden. Der Abschnitt 230 kann zweigeteilt 231, 232 ausgestaltet sein, wobei der erste Teil 231 an den ersten Abschnitt 210 und der zweite Teil 232 an den zweiten Abschnitt 220 befestigt ist.

Das Rotorblatt 200 weist ferner eine Wandung 205, eine Rotorblattinnenseite 206 (auf der Innenseite der Wandung) und eine Rotorblattaußenseite 207 auf. Das Rotorblatt 200 wird typischerweise hergestellt, indem zwei Halbschalen miteinander befestigt werden bzw. aneinander verklebt werden. Damit entsteht eine Rotorblattinnenseite 206 und eine Rotorblattaußenseite 207, welches die äußere Oberfläche des Rotorblattes darstellt.

Fig. 3A zeigt eine schematische Schnittansicht einer Trennstelle von Fig. 2. Das Windenergieanlagen-Rotorblatt 200 weist ein erstes und zweites Teil 210, 220 auf, welche durch eine Trennstelle 200a voneinander getrennt sind. Das erste und zweite Rotorblattteil 210, 220 sind mittels mindestens einer Befestigungseinheit 300 aneinander bzw. miteinander befestigt. Die Wandung 205 im Bereich des ersten Rotorblattteils weist erste Löcher 210b und die Wandung 205 des zweiten Rotorblattteils weist zweite Löcher 220b auf. Diese Löcher bzw. Bohrungen erstrecken sich von der Rotorblattaußenseite 207 (durch die Wandung 205 bzw. das Laminat an diesen Stellen) zu der Rotorblattinnenseite 206. Die ersten Löcher 210b sind in dem Laminat 210a der Wandung 205 des ersten Rotorblattteils vorgesehen. Die zweiten Löcher 220b sind in dem Laminat 220a des zweiten Rotorblattteils 220 vorgesehen.

Die Befestigungseinheit 300 weist ein Seil 310 oder eine Seilschlaufe 310 auf. Das Seil bzw. die Seilschlaufe 310 kann aus einem Hochmodulpolyester oder aus Glasfaser ausgestaltet sein oder kann ein Stahlseil darstellen. Die Befestigungseinheit 300 kann in den ersten und/oder zweiten Löchern 210b, 220b jeweils einen Querbolzen 320 aufweisen. Der Querbolzen 320 kann der gleichmäßigen Verteilung der Seilkraft auf das jeweilige Laminat dienen. Die Befestigungseinheit 300 weist ferner ein Spannelement 330 auf, mit welchem das erste und zweite Ende 311, 312 des Seiles verspannt bzw. vorgespannt werden können. Das Spannelement 330 kann beispielsweise als eine M24-Schraube mit entsprechender Mutter ausgestaltet sein. Die Befestigungseinheit 300 kann ferner Elemente 340 aufweisen, welche die ersten und zweiten Enden 311, 312 des Seils aufnehmen können. Das Spannelement 330 kann optional mit den Elementen 340 zusammenwirken.

Optional kann zur weiteren Verbesserung der Verbindung zwischen dem ersten und zweiten Rotorblattabschnitt 210, 220 mindestens ein Zentrierbolzen 350 in dem Laminat 210a, 220a im Bereich der Trennstelle 200a vorgesehen sein.

Fig. 3B zeigt eine schematische Draufsicht auf eine Trennstelle von Fig. 2. Das Seil 310 kann mittels der Querbolzen 320 durch die Löcher 210b, 220b geführt werden. Da die Querbolzen bzw. die Führung für die Seile zumindest teilweise gekrümmt ausgestaltet sind, kann sich das Seil 310 gut hieran anpassen.

Gemäß der Erfindung werden die Querbolzen 320 in die Bohrungen 210b, 220b platziert. Optional kann mindestens eine Nut 208 in demjenigen Bereich des ersten und zweiten Rotorblattteils 210, 220 vorgesehen sein, welche zwischen den Bohrungen 210b, 220b und der Trennstelle 200a vorgesehen sind. In diese Nuten 208 kann das Seil 310 platziert werden. Dies ist vorteilhaft, weil das Seil 310 damit nicht über die Außenoberfläche des Rotorblattes übersteht. Damit kann verhindert werden, dass die Aerodynamik negativ beeinflusst wird.

Optional können die Querbolzen 320 bereits bei der Produktion des Rotorblattes eingesetzt und fixiert werden. Auf der Baustelle kann dann das erste und zweite Rotorblattteil 210, 220 mittels der Zentrierbolzen 350 bzw. unter Berücksichtigung der Zierbolzen 350 miteinander verbunden werden, bevor das Seil 310 durch die Bohrungen 210b, 220b geführt und mittels des Spannelementes 330 vorgespannt wird. Die Vorspannung, welche durch das Spannelement 330 aufgebracht wird, kann beispielsweise mittels eines elektrischen Drehmomentschraubers erzeugt werden. Zur Überprüfung der Vorspannkraft kann das Spannelement 330 nachträglich erneut mit einem Drehmoment belastet werden.

Gemäß einem Aspekt der vorliegenden Erfindung kann auf dem Querbolzen 320 eine Gleitbeschichtung 321 vorgesehen sein, um eine Reibung zwischen dem Seil 310 und dem Querbolzen 320 zu reduzieren oder zu minimieren.

Gemäß einem Aspekt der vorliegenden Erfindung können mehrere Befestigungseinheiten 300 vorgesehen sein, wobei die Länge der Seile 310 sowie die Position der ersten und zweiten Durchgangsbohrungen 310b, 320b variieren können.

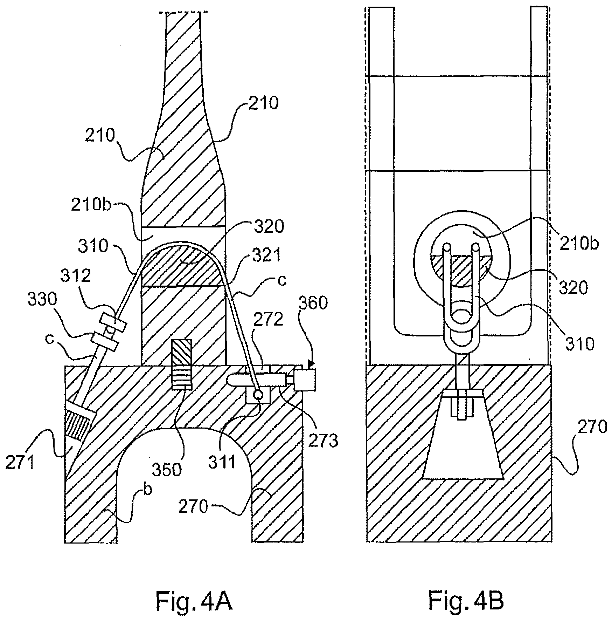

Fig. 4A zeigt einen schematischen Querschnitt einer Flanschverbindung und Fig. 4B zeigt eine schematische Draufsicht auf eine Flanschverbindung gemäß der Erfindung. Während gemäß den Figuren 3A und 3B eine Verbindung zwischen zwei Teilen des Rotorblattes beschrieben wurde, wird in Fig. 4A und Fig. 4B eine Flanschverbindung dargestellt.

In dem Ausführungsbeispiel von Fig. 4A und 4B wird lediglich eine Hälfte der Befestigungseinheit von Fig. 3 verwendet, um ein Rotorblatt an einem Flansch zu befestigen. Die Befestigungseinheit 300 weist somit ein Befestigungsseil 310 auf.

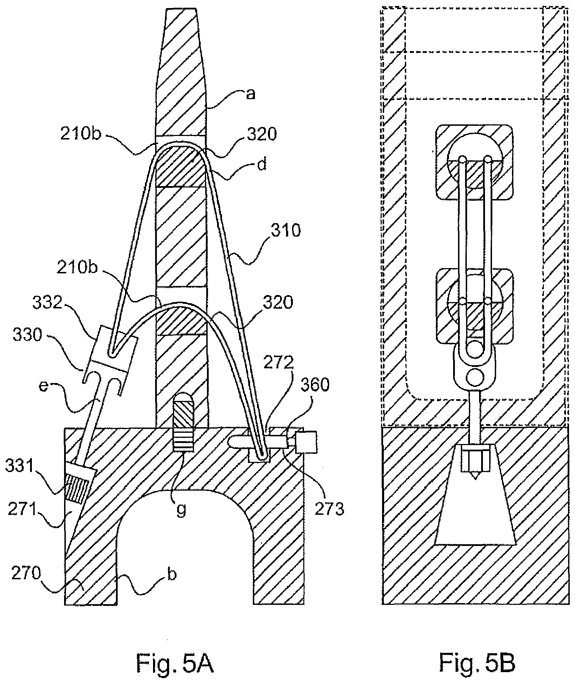

In dem Ausführungsbeispiel von Fig. 4A und 4B bzw. 5A und 5B wird eine Verbindungsstelle vorgesehen, welche im Wesentlichen auf Längsbolzen verzichten kann. Ein Seil 310 der Befestigungseinheit 300 wird um einen Querbolzen 320 in einer Durchgangsbohrung 210b in einem Laminat eines Rotorblattes geführt und zum einen an einem Bolzen und zum anderen an einem Spannelement 330 befestigt, wobei das Spannelement 330 zum Einleiten einer Vorspannung in das Seil 310 verwendet wird. Wie in dem Ausführungsbeispiel von Fig. 3A und 3B kann mindestens ein Zentrierbolzen 350 vorgesehen sein.

Ein Teil 210 des Rotorblattes 200 kann mittels der Befestigungseinheiten 300 an einem Blattlager 270 befestigt werden. Optional können Zentrierbolzen 350 als Zentrierhilfen vorgesehen sein. Ein erstes Ende 311 des Seiles 310 kann mittels eines Befestigungsbolzens 360 befestigt werden. Dazu kann eine Ausnehmung 372 in dem Blattlager vorgesehen sein, um das erste Ende 311 aufzunehmen. Für den Bolzen 360 ist eine Bohrung 273 vorgesehen. Der Bolzen 360 hält dann das erste Ende 311 des Seils.

Eine weitere Ausnehmung 271 ist vorgesehen, um ein Ende des Spannelementes 330 aufzunehmen. Das andere Ende des Spannelementes nimmt dann das zweite Ende 312 des Seils auf. Das Spannelement 330 dient dazu, eine Vorspannung auf das Seil aufzubringen. Der Querbolzen 320 kann eine Beschichtung 321 aufweisen, um die Gleitreibung zwischen dem Querbolzen 320 und dem Seil 310 zu reduzieren.

In dem Ausführungsbeispiel von Fig. 5A und Fig. 5B ist eine zweireihige Flanschverbindung dargestellt. Das erste Rotorblattteil 210 weist somit in Längsrichtung zwei ausgerichtete Löcher 210b auf, in welchen jeweils ein Querbolzen 320 vorgesehen ist. Ferner sind zwei Seile 310 vorgesehen, welche jeweils mit dem Spannelement 330 und dem Bolzen 360 gekoppelt sind. Die Seile 310 laufen jeweils um den Querbolzen 320 herum.

Mittels der Nuten 208, welche die Seile 310 aufnehmen können, kann erreicht werden, dass kein Teil der Befestigungseinheit über die Außenoberfläche des Rotorblattes hinausragt.

Mit der erfindungsgemäßen Befestigungseinheit lässt sich die Dicke des Laminats im Bereich der Trennstelle erheblich reduzieren, so dass das Gewicht der Rotorblätter insbesondere im Bereich der Trennstellen erheblich reduziert werden kann.

Mittels der erfindungsgemäßen Verbindungsmöglichkeiten von zwei Teilen eines Rotorblattes bzw. der erfindungsgemäßen Verbindungsmöglichkeit zwischen einem Blattlager und einem Rotorblatt kann auf eine übliche Querbolzenverbindung bzw. die sog. Ikea-Verbindung (basierend auf Längsbolzen, welche in Querbolzen eingeschraubt werden) verzichtet werden. Erfindungsgemäß kann die benötigte Vorspannkraft für die Seile seitlich vom Laminat und damit auf der Blattinnenseite des Lagers erfolgen. Damit kann auf einen Blattadapter oder ein breites Laminat an der Anschlussstelle verzichtet werden.

Ferner kann das Gewicht im Bereich der Verbindungsstelle weiter reduziert werden, da die ansonsten notwendigen großen Öffnungen für die Platzierung von hydraulischen Spannzylindern oder Öffnungen für den Austausch der Längsbolzen entfallen können.

Für das Vorsehen der Vorspannung der Seile kann erfindungsgemäß ein normaler elektrischer Drehmomentschrauber seitlich vorgesehen sein. Damit kann auf hydraulische Spannzylinder verzichtet werden.

Während im Stand der Technik die Verwendung von Standardquerbolzen-Anschlüssen mit den sich darin verschraubten Längsbolzen eine Schwächung des Querbolzens bewirkt, muss dieser einen größeren Durchmesser aufweisen. Dies führt wiederum zu einer Verringerung des Laminatquerschnitts, der zwischen benachbarten Querbolzen übrig bleibt. Die Schwächung der Querbolzen wird erfindungsgemäß vermieden, wodurch dünnere Querbolzen verwendet werden können. Dies führt wiederum zu einer Reduzierung der notwendigen Laminatdicke im Bereich des Rotorflansches. Damit können derartige Rotorblätter günstiger gefertigt werden, benötigen weniger Material und dies führt zu einer Vergrößerung der inneren statischen Höhe im Falle einer Brennblatttrennstelle.

Wenn zweireihige oder mehrreihige Anschlussstellen vorgesehen werden, dann kann dies zu einer weiteren Reduzierung der Dicke des Flanschlaminates führen. Die Pressung aus der Vorspannkraft wird über zwei Querbolzen verteilt. Optional können Seile aus Hochmodulpolyester verwendet werden, wodurch die Seile eine hohe Dehnung aufweisen, welches sich vorteilhaft hinsichtlich der Ermüdungseigenschaften der Verbindung auswirkt.

Gemäß der Erfindung dienen die Querbolzen 320 dazu, die durch das Seil 310 erzeugten Kräfte in das Laminat 210a, 220a einzuleiten. Dazu kann es ausreichen, die Querbolzen schlank bzw. dünn auszugestalten. Dies ist möglich, weil die Querbolzen 320 nicht durch Biegemomente belastet werden. Die Querbolzen 320 weisen zumindest einen Seilführungsabschnitt auf, um das Seil entsprechend zu führen. Damit kann die Seilpressung verbessert auf das Laminat 210a, 220a übertragen werden. Durch die erfindungsgemäße Ausgestaltung der Verbindungseinheit kann eine Schwächung des Querbolzens und eine Biegebeanspruchung des Querbolzens vermieden werden. Die erfindungsgemäße Befestigungseinheit ist vorteilhaft, weil sie lediglich eine Pressung der Querbolzen 320 gegen das Laminat aufgrund des vorgespannten Seils bewirkt. Dadurch, dass die Querbolzen dünner ausgestaltet werden können, führt dies auch zu einer Reduzierung der Laminatdicke im Bereich der Trennstelle 200a. Damit wird also somit weniger Material im Bereich der Trennstelle benötigt.

Die in die Durchgangsbohrungen 210b, 220b eingeführten Querbolzen 320 dienen somit einer verbesserten Lastverteilung im Bereich der Trennstelle 200a.

Erfindungsgemäß wird somit ein mehrteiliges Rotorblatt vorgesehen, welches vorteilhafterweise im Bereich der Trennstelle zwischen dem ersten und zweiten Rotorblattteil eine reduzierte Laminatdicke aufweist, ohne die Stabilität der Verbindung zu gefährden.

Die erfindungsgemäßen Querbolzen 320 dienen als eine Lastverteileinheit.

## Patentansprüche

1. Windenergieanlagen-Rotorblatt (200), mit
einer Blattaußenseite (207),
einer Wandung (205),
einer Blattinnenseite (206), und
mindestens einem ersten und zweiten Rotorblattteil (210, 220), welche mittels mindestens einer Befestigungseinheit (300) in einer Teilungsebene (200a) miteinander befestigt sind,
wobei die Wandung (205) im Bereich des ersten Rotorblattteils (210) ein Laminat (210a) mit mindestens einer ersten Durchgangsbohrung (210b) aufweist,
wobei die Wandung (205) im Bereich des zweiten Rotorblattteils (220) ein Laminat (220a) mit mindestens einer zweiten Durchgangsbohrung (220b) aufweist,
wobei die mindestens eine Befestigungseinheit (300) ein Seil (310) mit einem ersten und zweiten Ende (311, 312) sowie ein Spannelement (330) aufweist, welches mit dem ersten und zweiten Ende (311, 312) des Seils (310) gekoppelt ist und dazu ausgestaltet ist, das Seil (310) vorzuspannen,
wobei das erste und zweite Ende (311, 312) des Seils (310) sowie das Spannelement (330) auf der Rotorblattinnenseite (206) angeordnet ist,
wobei das Seil (310) durch die erste und zweite Durchgangsbohrung (210b, 220b) geführt ist,
wobei die mindestens eine Befestigungseinheit (300) Querbolzen (320) in den ersten und zweiten Durchgangsbohrungen (210b, 220b) aufweist, wobei die Querbolzen (320) dazu dienen, das Seil (310) in der ersten und zweiten Durchgangsbohrung (210b, 220b) umzulenken, so dass ein Abschnitt des Seils an der Rotorblattaußenseite (207) anliegt und das erste und zweite Ende (311, 312) des Seils (310) auf der Rotorblattinnenseite (206) vorgesehen sind.

2. Windenergieanlagen-Rotorblatt nach Anspruch 1, mit
mindestens einer Nut (208) in dem ersten und zweiten Rotorblattabschnitt (210, 220) im Bereich der Trennstelle (200a),
wobei die mindestens eine Nut (208) dazu ausgestaltet ist, das Seil (310) der Befestigungseinheit (300) zumindest teilweise aufzunehmen.

3. Windenergieanlagen-Rotorblatt nach einem der Ansprüche 1 oder 2, wobei
die Querbolzen (320) zumindest teilweise eine Gleitbeschichtung (321) aufweisen, um die Reibung zwischen dem Seil (310) und dem Querbolzen (320) zu reduzieren.

4. Windenergieanlage nach einem der Ansprüche 1 bis 3, ferner mit
einer Mehrzahl von Zentrierbolzen (350), wobei die Zentrierbolzen (350) sowohl in das Laminat (210a) des ersten Rotorblattteils (210) als auch in das Laminat (220a) des zweiten Rotorblattteils (220) des Rotorblatts (200) hineinragen.

5. Windenergieanlagen-Rotorblatt nach einem der Ansprüche 1 bis 4, wobei
die Querbolzen (320) jeweils eine Seilführung (322) für das Seil (310) aufweisen.

6. Windenergieanlage, mit
mindestens einem Windenergieanlagen-Rotorblatt (200) nach einem der Ansprüche 1 bis 5.

7. Windenergieanlage, mit
mindestens zwei Rotorblatt-Anschlussstellen (270) und
mindestens zwei Windenergieanlagen-Rotorblättern (200), welche jeweils eine Rotorblattaußenseite (207), eine Wandung (205) und eine Rotorblattinnenseite (206) aufweisen,
wobei die Wandung (205) in dem Bereich eines ersten Rotorblattteils (210) mindestens eine Durchgangsbohrung (210b) aufweist, und
mindestens zwei Befestigungseinheiten (300) zum Befestigen eines Windenergieanlagen-Rotorblatts (200) an einer der Rotorblattanschlussstellen (270),
wobei jede Befestigungseinheit (300) mindestens einen Querbolzen (320) in einer der Durchgangsbohrungen (210b) aufweist,
wobei jede Befestigungseinheit (300) ferner ein Seil (310) mit einem ersten und zweiten Ende (311, 312) aufweist, wobei das Seil (310) um den Querbolzen (320) in der Durchgangsbohrung (210b) geführt ist,
wobei ein erstes Ende (311) des Seils mittels eines Bolzens (360) in oder an der Blattanschlussstelle (270) befestigt ist,
wobei jede Befestigungseinheit (300) ferner ein Spannelement (330) aufweist,
wobei ein erstes Ende des Spannelementes (330) mit dem zweiten Ende (312) des Seils (310) gekoppelt ist und das zweite Ende des Spannelementes (330) in oder an der Rotorblattanschlussstelle (270) befestigt ist,
wobei das Spannelement (330) dazu ausgestaltet ist, das Seil (310) vorzuspannen.

8. Verfahren zur Montage eines Windenergieanlagen-Rotorblattes, welches eine Blattaußenseite (207), eine Wandung (205), eine Blattinnenseite (206) und mindestens ein erstes und zweites Rotorblattteil (210, 220) aufweist, wobei die Wandung (205) im Bereich des ersten Rotorblattteils (210) ein Laminat (210a) mit mindestens einer ersten Durchgangsbohrung (210b) aufweist, wobei die Wandung (205) im Bereich des zweiten Rotorblattteils (220) ein Laminat (220a) mit mindestens einer zweiten Durchgangsbohrung (220b) aufweist, mit den Schritten:
Einführen eines ersten und zweiten Endes (311, 312) eines Seils (310) von der Blattaußenseite (207) durch die erste und zweite Durchgangsbohrung (210b, 220b) des ersten und zweiten Rotorblattteils (210, 220),
Koppeln eines Spannelementes (330) der Befestigungseinheit (300) mit dem ersten und zweiten Ende (311, 312) des Seils (310) auf der Blattinnenseite (206),
Vorspannen des Seils (310) mittels des Spannelementes (330),
wobei das erste und zweite Ende (311, 312) des Seils (310) sowie das Spannelement (330) auf der Rotorblattinnenseite (206) angeordnet sind,
wobei die mindestens eine Befestigungseinheit (300) Querbolzen (320) in den ersten und zweiten Durchgangsbohrungen (210b, 220b) aufweist, wobei die Querbolzen (320) dazu dienen, das Seil (310) in der ersten und zweiten Durchgangsbohrung (210b, 220b) umzulenken, so dass ein Abschnitt des Seils an der Rotorblattaußenseite (207) anliegt und das erste und zweite Ende (311, 312) des Seils (310) auf der Rotorblattinnenseite (206) vorgesehen sind.

## Claims

1. Wind turbine rotor blade (200) having
a blade outer side (207),
a wall (205),
a blade inner side (206), and
at least a first and second rotor blade portion (210, 220) which are secured to each other by means of at least one securing unit (300) in a dividing plane (200a),
wherein the wall (205) has in the region of the first rotor blade portion (210) a laminate (201a) having at least a first through-hole (210b),
wherein the wall (205) has in the region of the second rotor blade portion (220) a laminate (220a) having at least a second through-hole (220b),
wherein the at least one securing unit (300) has a cable (310) having a first end and second end (311, 312) and a tensioning element (330) which is coupled to the first and second end (311, 312) of the cable (310) and which is configured to pretension the cable (310),
wherein the first end and second end (311, 312) of the cable (310) and the tensioning element (330) are arranged at the rotor blade inner side (206),
wherein the cable (310) is guided through the first and second through-holes (210b, 220b),
wherein the at least one securing unit (300) has transverse pins (320) in the first and second through-holes (210b, 220b), wherein the transverse pins (320) serve to redirect the cable (310) in the first and second through-holes (210b, 220b) so that a portion of the cable abuts the rotor blade outer side (207) and the first and second ends (311, 312) of the cable (310) are provided on the rotor blade inner side (206).

2. Wind turbine rotor blade according to claim 1, having at least one groove (208) in the first and second rotor blade portions (210, 220) in the region of the separation location (200a),
wherein the at least one groove (208) is configured to at least partially receive the cable (310) of the securing unit (300) .

3. Wind turbine rotor blade according to either claim 1 or 2, wherein
the transverse pins (320) at least partially have a sliding coating (321) in order to reduce the friction between the cable (310) and the transverse pin (320).

4. Wind turbine according to any one of claims 1 to 3, further having
a plurality of centering pins (350), wherein the centering pins (350) protrude both into the laminate (210a) of the first rotor blade potion (210) and into the laminate (220a) of the second rotor blade portion (220) of the rotor blade (200) .

5. Wind turbine rotor blade according to any one of claims 1 to 4, wherein
the transverse pins (320) each have a cable guide (322) for the cable (310).

6. Wind turbine having
at least one wind turbine rotor blade (200) according to any one of claims 1 to 5.

7. Wind turbine having
at least two rotor blade connection locations (270) and
at least two wind turbine rotor blades (200) which each have a rotor blade outer side (207), a wall (205) and a rotor blade inner side (206),
wherein the wall (205) has in the region of a first rotor blade portion (210) at least one through-hole (201b), and
at least two securing units (300) for securing a wind turbine rotor blade (200) to one of the rotor blade connection locations (270),
wherein each securing unit (300) has at least one transverse pin (320) in one of the through-holes (210b),
wherein each securing unit (300) further has a cable (310) having a first and second end (311, 312), wherein the cable (310) is guided around the transverse pin (320) in the through-hole (210b),
wherein a first end (311) of the cable is secured by means of a pin (360) in or on the blade connection location (270), wherein each securing unit (300) further has a tensioning element (330),
wherein a first end of the tensioning element (330) is coupled to the second end (312) of the cable (310) and the second end of the tensioning element (330) is secured in or on the rotor blade connection location (270),
wherein the tensioning element (330) is configured to pretension the cable (310).

8. Method for assembly of a wind turbine rotor blade which has a blade outer side (207), a wall (205), a blade inner side (206) and at least a first and second rotor blade portion (210, 220), wherein the wall (205) has in the region of the first rotor blade portion (210) a laminate (210a) having at least a first through-hole (210b),
wherein the wall (205) has in the region of the second rotor blade portion (220) a laminate (220a) having at least a second through-hole (220b), having the steps of:
introducing a first and second end (311, 312) of a cable (310) from the blade outer side (207) through the first and second through-holes (210b, 220b) of the first and second rotor blade portions (210, 220),
coupling a tensioning element (330) of the securing unit (300) to the first end and second end (311, 312) of the cable (310) at the blade inner side (206),
pretensioning the cable (310) by means of the tensioning element (330),
wherein the first end and second end (311, 312) of the cable (310) and the tensioning element (330) are arranged at the rotor blade inner side (206),
wherein the at least one securing unit (300) has transverse pins (320) in the first and second through-holes (210b, 220b), wherein the transverse pins (320) serve to redirect the cable (310) in the first and second through-holes (210b, 220b) so that a portion of the cable abuts the rotor blade outer side (207) and the first end and second end (311, 312) of the cable (310) are provided at the rotor blade inner side (206).

## Revendications

1. Pale de rotor d'éolienne (200), avec
une face extérieure de pale (207),
une paroi (205),
une face intérieure de pale (206), et
au moins une première et une deuxième partie de pale de rotor (210, 220), lesquelles sont fixées l'une à l'autre dans un plan de division (200a) au moyen d'au moins une unité de fixation (300),
dans laquelle la paroi (205) présente dans la zone de la première partie de pale de rotor (210) un stratifié (210a) avec au moins un premier trou de passage (210b),
dans laquelle la paroi (205) présente dans la zone de la deuxième partie de pale de rotor (220) un stratifié (220a) avec au moins un deuxième trou de passage (220b),
dans laquelle la au moins une unité de fixation (300) présente un câble (310) avec une première et une deuxième extrémité (311, 312) ainsi qu'un élément de serrage (330), lequel est accouplé à la première et la deuxième extrémité (311, 312) du câble (310) et est conçu pour précontraindre le câble (310),
dans laquelle la première et la deuxième extrémité (311, 312) du câble (310) ainsi que l'élément de serrage (330) est disposé(e) sur la face intérieure de pale (206) de rotor,
dans laquelle le câble (310) est guidé à travers le premier et le deuxième trou de passage (210b, 220b),
dans laquelle la au moins une unité de fixation (300) présente des boulons transversaux (320) dans le premier et le deuxième trou de passage (210b, 220b), dans laquelle les boulons transversaux (320) servent à dévier le câble (310) dans le premier et le deuxième trou de passage (210b, 220b), de sorte qu'une section du câble s'applique sur la face extérieure de pale (207) de rotor et la première et la deuxième extrémité (311, 312) du câble (310) sont prévues sur la face intérieure de pale (206) de rotor.

2. Pale de rotor d'éolienne selon la revendication 1, avec
au moins une rainure (208) dans la première et la deuxième section de pale de rotor (210, 220) dans la zone du point de séparation (200a),
dans laquelle la au moins une rainure (208) est conçue pour recevoir au moins en partie le câble (310) de l'unité de fixation (300).

3. Pale de rotor d'éolienne selon l'une quelconque des revendications 1 ou 2, dans laquelle
les boulons transversaux (320) présentent au moins en partie un revêtement glissant (321), afin de réduire le frottement entre le câble (310) et le boulon transversal (320).

4. Eolienne selon l'une quelconque des revendications 1 à 3, en outre avec
une pluralité de boulons de centrage (350), dans laquelle les boulons de centrage (350) font saillie aussi bien dans le stratifié (210a) de la première partie de pale de rotor (210) que dans le stratifié (220a) de la deuxième partie de pale de rotor (220) de la pale de rotor (200).

5. Pale de rotor d'éolienne selon l'une quelconque des revendications 1 à 4, dans laquelle
les boulons transversaux (320) présentent respectivement un guidage latéral (322) pour le câble (310) .

6. Eolienne, avec
au moins une pale de rotor (200) d'éolienne selon l'une quelconque des revendications 1 à 5.

7. Eolienne, avec
au moins deux points de raccordement de pale (270) de rotor et
au moins deux pales de rotor (200) d'éolienne, lesquelles présentent respectivement une face extérieure de pale (207) de rotor, une paroi (205) et une face intérieure de pale (206) de rotor,
dans laquelle la paroi (205) présente dans la zone d'une première partie de pale de rotor (210) au moins un trou de passage (210b), et
au moins deux unités de fixation (300) pour la fixation d'une pale de rotor (200) d'éolienne sur un des points de raccordement de pale (270) de rotor,
dans laquelle chaque unité de fixation (300) présente au moins un boulon transversal (320) dans un des trous de passage (210b),
dans laquelle chaque unité de fixation (300) présente en outre un câble (310) avec une première et une deuxième extrémité (311, 312), dans laquelle le câble (310) est guidé autour du boulon transversal (320) dans le trou de passage (210b),
dans laquelle une première extrémité (311) du câble est fixée au moyen d'un boulon (360) dans ou sur le point de raccordement de pale (270),
dans laquelle chaque unité de fixation (300) présente en outre un élément de serrage (330),
dans laquelle une première extrémité de l'élément de serrage (330) est accouplée à la deuxième extrémité (312) du câble (310) et la deuxième extrémité de l'élément de serrage (330) est fixée dans ou sur le point de raccordement de pale de rotor (270),
dans laquelle l'élément de serrage (330) est conçu pour précontraindre le câble (310).

8. Procédé pour le montage d'une pale de rotor d'éolienne, laquelle présente une face extérieure de pale (207), une paroi (205), une face intérieure de pale (206) et au moins une première et une deuxième partie de pale de rotor (210, 220), dans lequel la paroi (205) présente dans la zone de la première partie de pale de rotor (210) un stratifié (210a) avec au moins un premier trou de passage (210b), dans lequel la paroi (205) présente dans la zone de la deuxième partie de pale de rotor (220) un stratifié (220a) avec au moins un deuxième trou de passage (220b), avec les étapes :
d'introduction d'une première et une deuxième extrémité (311, 312) d'un câble (310) à partir de la face extérieure de pale (207) à travers le premier et le deuxième trou de passage (210b, 220b) de la première et la deuxième partie de pale de rotor (210, 220),
d'accouplement d'un élément de serrage (330) de l'unité de fixation (300) à la première et la deuxième extrémité (311, 312) du câble (310) sur la face intérieure de pale (206),
de précontrainte du câble (310) au moyen de l'élément de serrage (330),
dans lequel la première et la deuxième extrémité (311, 312) du câble (310) ainsi que l'élément de serrage (330) sont disposés sur la face intérieure de pale (206) de rotor,
dans lequel la au moins une unité de fixation (300) présente des boulons transversaux (320) dans le premier et le deuxième trou de passage (210b, 220b), dans lequel les boulons transversaux (320) servent à dévier le câble (310) dans le premier et le deuxième trou de passage (210b, 220b), de sorte qu'une section du câble s'applique contre la face extérieure de pale (207) de rotor et la première et la deuxième extrémité (311, 312) du câble (310) sont prévues sur la face intérieure de pale (206) de rotor.
